# EUROPEAN PATENT APPLICATION

(11) **EP 1 856 987 A1**
(43) Date of publication of application: **21.11.2007**
(21) Application number: 06252618.1
(22) Date of filing: 19.05.2006
(51) Int. Cl.: A23L 1/214

(54) **A method of manufacturing konnyaku food**

(71) Applicant: Kida, Keiji, Metropolis Drive, Kowloon, Hong Kong (CN)
(72) Inventor: Kida, Keiji, Metropolis Drive, Kowloon, Hong Kong (CN)
(74) Representative: Setna, Rohan P.

(57) **Abstract**

A method of manufacturing konnyaku food comprising the steps of adding an alkali solution to dried bean-curd refuse and kneading a mixture thereof to prepare a bean-curd refuse coagulating agent; adding viscous food to the bean-curd refuse coagulating agent and kneading a mixture thereof to obtain a first uniform mixture; adding warm water to the first uniform mixture to prepare a second uniform mixture; adding konnyaku paste obtained by kneading a mixture of fine konnyaku powder and the warm water to the second uniform mixture and kneading a mixture thereof to prepare an all components-containing uniform mixture; and heating the all components-containing uniform mixture to coagulate the all components-containing uniform mixture.

## Description

### BACKGROUND OF THE INVENTION

### Field of the Invention

The present invention relates to a method of manufacturing a konnyaku food and the konnyaku food manufactured by the manufacturing method. More particularly, the present invention relates to a konnyaku food in which bean-curd refuse is added to konnyaku.

### Description of the Related Art

This kind of processed food is disclosed in Japanese Patent Application Laid-Open No.2004-89113 (patent document 1). According to the disclosure, the food is obtained by uniformly mixing a konnyaku, a bean-curd refuse, and an egg and then solidifying the mixture thereof with an alkali solution.

In the manufacturing method disclosed in the patent document 1, as disclosed in the examples 1 through 3 of the specification, the mixture of the warm water and the bean-curd refuse is kneaded. The raw material of konnyaku and the egg are supplied thereto. The mixture of all the components is uniformly mixed with each other. Thereafter the alkali solution is added thereto.

The present inventors have made experiments on the manufacturing method disclosed in the patent document 1. As a result, they have found that when the alkali solution is added to the mixture of the kneaded bean-curd refuse, konnyaku, and egg as the coagulating agent, the alkali solution is absorbed by konnyaku paste generated by mixing of the warm water and the konnyaku and does not permeate into the bean-curd refuse sufficiently. This means that it is difficult for the bean-curd refuse to solidify integrally with the konnyaku and the egg. They have also found that the manufacturing method has a problem in that when the addition amount of the bean-curd refuse is increased, it is difficult for the bean-curd refuse to be integrated with the konnyaku and the egg.

The manufacturing method has another problem. That is, when the raw material (powder of konnyaku) of the konnyaku and the egg are supplied to the mixture of the warm water and the bean-curd refuse at the same time, the egg is solidified by the warm water. Thus the egg does not permeate into the bean-curd refuse sufficiently. Consequently the bean-curd refuse does not taste mild and hardly solidifies integrally with the konnyaku.

Most of this kind of processed food is mass-produced and stored in a freezer. In particular, because this kind of processed food contains the egg, it is essential to store it in the freezer. But in the specification of the patent document 1, no description is made on the step of storing it in the freezer.

Patent document 1: Japanese Patent Application Laid-Open No.2004-89113

### SUMMARY OF THE INVENTION

The present invention has been made in view of the above-described problems. Therefore it is a first object of the present invention to solve the problem of the manufacturing method disclosed in the patent document 1. It is a second object of the present invention to provide a method of storing processed konnyaku food in a freezer.

To solve the above-described problems, the present invention provides a method of manufacturing konnyaku food including the steps of adding an alkali solution to dried bean-curd refuse and kneading a mixture thereof to prepare a bean-curd refuse coagulating agent; adding viscous food to the bean-curd refuse coagulating agent and kneading a mixture thereof to obtain a first uniform mixture; adding warm water to the first uniform mixture to prepare a second uniform mixture; adding konnyaku paste obtained by kneading a mixture of fine konnyaku powder and the warm water to the second uniform mixture and kneading a mixture thereof to prepare an all components-containing uniform mixture; and heating the all components-containing uniform mixture to coagulate the all components-containing uniform mixture.

As described above, in the present invention, initially the alkali solution is added to the dried bean-curd refuse. Thereafter the mixture thereof is stirred to form the bean-curd refuse into the flowable coagulating agent.

At the next step, the viscous food is added to the coagulating agent consisting of the bean-curd refuse, and then the mixture thereof is kneaded to permeate the viscous food into the bean-curd refuse sufficiently so that the taste of the viscous food penetrates into the bean-curd refuse and the manufactured konnyaku food does not taste dry.

The konnyaku paste prepared by kneading the mixture of the fine konnyaku powder and the warm water is supplied to the uniform mixture of the bean-curd refuse coagulating agent and the viscous food. Thereafter the mixture thereof is kneaded. The konnyaku paste does not contain calcium hydroxide, although the calcium hydroxide is used as a coagulating agent in the conventional method.

As described above, the alkali solution is added to the dried bean-curd refuse and the mixture thereof is kneaded to prepare the bean-curd refuse coagulating agent. Thereby the bean-curd refuse can be solidified integrally with the konnyaku. Further, the addition of the viscous food to the bean-curd refuse coagulating agent allows the viscous food to permeate into the bean-curd refuse sufficiently. Thus the konnyaku food produced in this manner does not taste dry.

Owing to the above-described steps, it is possible to solve the problem of the manufacturing method disclosed in the patent document 1. Further it is possible to permeate the taste of the viscous food into the bean-curd refuse and solidify the bean-curd refuse integrally with the konnyaku paste.

As the alkali solution to be added to the dried bean-curd refuse, it is possible to use a calcium hydroxide solution, a sodium carbonate solution, and an ash solution, all of which solidify the konnyaku paste sufficiently when they mix with the konnyaku paste.

As the viscous food to be added to the bean-curd refuse coagulating agent, one or a plurality of the following foods is used:
animal foods:
   terrestrial animals: a hen's raw egg, fermented milk, and animal joints;
   aquatic animals: an outermost layer of the skin of fish, fish eggs, a jellyfish, shark fin, eel, and dojo;
vegetative foods: yams such as a Chinese yam, Icho-imo, and a cinnamon vine; a taro, an okura (gumbo), grated yam, water shield, arrowroot starch gruel, Welsh onion, glutinous rice, non-glutinous rice, fermented soybeans, and an edible fungus of the family Strophariacede (Pholiota nameko);
   aquatic plants: seaweeds such as kombu (tangle), wakame, and the like; and gelidium jelly.

Seasonings, vegetables, fruits, paste of fish and meat or fish and meat in a liquid state or a thickening stabilizer such as gums may be added to the uniform mixture of the bean-curd refuse coagulating agent and the viscous food.

As the seasonings, sugar, salt, vinegar, soy sauce, miso, pepper, sesame, and citron or wasabi (Japanese horseradish) may be used.

Other than the seasonings, it is possible to add additives such as vegetables, fruits, cereals, paste of fish and meat or fish and meat in a liquid state to the uniform mixture of the bean-curd refuse coagulating agent and the viscous food. In this case, in dependence on the amount of the water used for the uniform mixture of the bean-curd refuse coagulating agent and the viscous food, the amount of the water to be subsequently added to the uniform mixture of the bean-curd refuse coagulating agent and the viscous food is adjusted.

Although it is preferable not to add acidic substances as the additives when the pH thereof is not more than 7 to the uniform mixture of the bean-curd refuse coagulating agent and the viscous food, a small amount thereof may be added thereto.

The viscous food, the seasoning, the vegetables, and the fruits are appropriately selected and combined with each other so that the konnyaku food has a particular seasoning and taste.

For example, it is possible to process the konnyaku food having a Japanese-style taste by using the skin of fish as the viscous food, soy sauce or miso as the seasoning, and the paste of fish as the additive.

It is possible to process the konnyaku food having a western-style taste by using a hen's raw egg (hereinafter often referred to as egg) as the viscous food; sauce, salt, and pepper as the seasoning; and the paste of meat as the additive.

It is possible to process the konnyaku food as sweets by using fermented milk as the viscous food, sugar and butter as the seasoning, and fruits as the additive. In this case, since the konnyaku food contains the konnyaku and the bean-curd refuse as its main component, the konnyaku food has a low calorie.

In the above-described step of heating the uniform mixture containing all of the components to coagulate the uniform mixture, it is preferable to heat the all components-containing uniform mixture in warm water at a temperature in the range of 80°C to the boiling temperature.

The present invention provides a method of manufacturing konnyaku food including the steps of heating the all components-containing uniform mixture after the all components-containing uniform mixture is filled into a die having a predetermined configuration; performing primary cooling after the all components-containing uniform mixture is integrally solidified by the heating; and packing the all components-containing uniform mixture; heating the all components-containing uniform mixture to sterilize the all components-containing uniform mixture; performing secondary cooling; and storing the all components-containing uniform mixture in a freezer as frozen food.

Alternatively, the present invention provides the steps of heating the all components-containing uniform mixture after the all components-containing uniform mixture is filled in a closed bag; performing primary cooling after the all components-containing uniform mixture is integrally solidified by the heating; heating the all components-containing uniform mixture to sterilize the all components-containing uniform mixture; performing secondary cooling; and storing the all components-containing uniform mixture in a freezer as frozen food.

In the former method, all components-containing uniform mixture is taken out of a die after it is integrally solidified by the heating, and thereafter cut in a required shape as necessarily. After the step of primary cooling finishes, the all components-containing uniform mixture cut in a required shape is packed.

In the latter method, since all components-containing uniform mixture is filled in a closed bag that has a required shape before the heating, the cutting process described above is not needed.

It is preferable to use calcium hydroxide as the alkali solution and a hen's raw egg as the viscous food.

In this case, it is preferable that the calcium hydroxide solution to be added to dried bean-curd refuse is prepared by using the warm water having a temperature not less than the normal temperature (preferably about 60°C) as the dispersion medium therefor. The mixing ratio between the dried bean-curd refuse and the calcium hydroxide is set to the range of 30:1 to 55:1.

It is preferable that in the calcium hydroxide solution, the mixing ratio between the calcium hydroxide and the warm water is set to the range of 1:50 to 1:200.

The entire raw egg is add to the bean-curd refuse coagulating agent after mixing the yellow and the white thereof with each other. The mixing ratio between the dried bean-curd refuse and the egg is set to 3:1 to 1:1, although the ratio varies according to whether the bean-curd refuse consists of fine powder or rough powder.

The mixing ratio between the warm water to be added to the uniform mixture of the bean-curd refuse coagulating agent and the egg and the warm water to be added to the calcium hydroxide as the dispersion medium therefor is set to 1/5 to 3/5, and more preferably about 2/5.

It is preferable that in the konnyaku paste, the mixing amount of the water is set to 25 to 35 times larger than that of the fine konnyaku powder. In the conventional method, after the mixture of the fine konnyaku powder and the warm water is stirred, the calcium hydroxide solution is added to the mixture thereof. That is, the calcium hydroxide solution is added to the konnyaku. On the other hand, in the present invention, the calcium hydroxide solution is not added to the konnyaku paste, but the mixture of the bean-curd refuse coagulating agent and the konnyaku paste is stirred, and thereafter the konnyaku paste is solidified when the all components-containing uniform mixture is heated.

It is preferable that the mixing ratio between the fine konnyaku powder and the dried bean-curd refuse is set to the range of 1:5 to 1:1.

The present invention provides the konnyaku food manufactured by the above-described method.

In the konnyaku food of the present invention, the viscous food such as an egg permeates sufficiently into the bean-curd refuse. Therefore the konnyaku food has a peculiar and mild taste. In addition, because the alkali solution permeates sufficiently into the bean-curd refuse, it is possible to solidify the bean-curd refuse uniformly and integrally with the konnyaku paste. Thus the konnyaku food does not taste dry.

As described above, in the method of manufacturing the konnyaku food of the present invention, initially the alkali solution such as the calcium hydroxide solution is added to the bean-curd refuse, and thereafter the mixture thereof is kneaded to prepare the bean-curd refuse coagulating agent. Because the bean-curd refuse is used as the coagulating agent, the bean-curd refuse can be dispersed uniformly in the konnyaku paste and integrated with the konnyaku paste securely.

Another aspect of the present invention is that the konnyaku paste and the viscous food such as the egg are not simultaneously added to the bean-curd refuse and that the viscous food such as the egg is added to the bean-curd refuse coagulating agent, and thereafter the mixture thereof is kneaded. Therefore it is possible to permeate the viscous food such as the egg into the bean-curd refuse sufficiently. Thereby the taste of the viscous food can be penetrated into the bean-curd refuse sufficiently.

As described above, the mixture of the konnyaku paste and the bean-curd refuse coagulating agent into which the viscous food such as the egg has permeated is stirred to prepare the uniform mixture. Thereafter the uniform mixture is heated. Thereby in the konnyaku food provided by the manufacturing method of the present invention, the konnyaku solidifies integrally with the bean-curd refuse into which the viscous food such as the egg has permeated. Therefore the taste of the viscous food penetrates into the bean-curd refuse sufficiently and the konnyaku food does not taste dry.

### BRIEF DESCRIPTION OF THE DRAWINGS

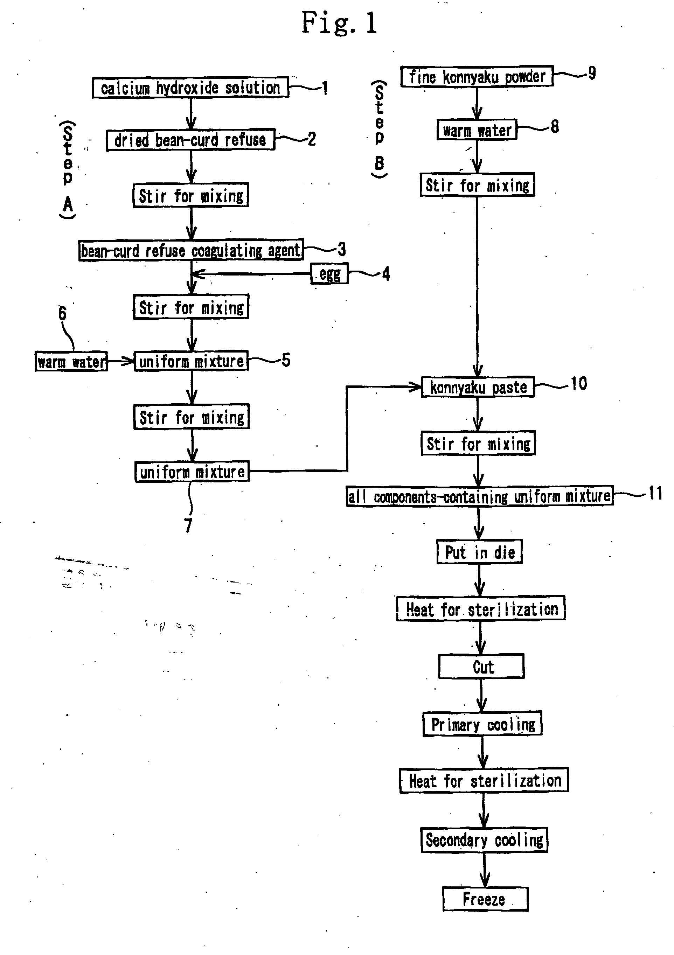

Fig. 1 shows the manufacturing steps of the present invention.

### DETAILED DESCRIPTION OF THE PREFERRED EMBODIMENTS

The first embodiment of the present invention will be described below.

In the first embodiment, calcium hydroxide is used as the alkali solution. A hen's egg is used as the viscous food.

Fig. 1 shows the manufacturing process. A step (A) shows the step of mixing a calcium hydroxide solution, bean-curd refuse, and an egg. A step (B) shows the step of stirring and kneading a mixture of konnyaku paste.

The konnyaku paste prepared at the step (B) is added to the uniform mixture, of the egg and the bean-curd refuse coagulating agent, prepared at the step (A), and the mixture of all the components of the konnyaku food is stirred to prepare an all components-containing uniform mixture.

More specifically, at the step (A), the calcium hydroxide solution 1 containing warm water, having a temperature of about 60°C, which serves as the dispersion medium therefor is prepared. The calcium hydroxide solution 1 is mixed with bean-curd refuse 2 consisting of dried powder. Then the mixture thereof is stirred. Thereby a flowable bean-curd refuse coagulating agent (solidified solution) 3 is prepared.

The mixing ratio between the dried bean-curd refuse 2 and the calcium hydroxide (the warm water serving as the dispersion medium is excluded) is set to the range of 30:1 to 55:1. The mixing ratio between the calcium hydroxide and the warm water serving as the dispersion medium therefor is set to the range of 1:100 to 1:260.

After the prepared bean-curd refuse coagulating agent 3 has a temperature at which an egg 4 does not solidify, the egg 4 is added to the prepared bean-curd refuse coagulating agent 3. Thereafter the mixture thereof is stirred. Thereby a uniform mixture 5 containing the egg 4 and the bean-curd refuse coagulating agent 3 is prepared.

The egg 4 is add to bean-curd refuse coagulating agent 3 after stirring the egg 4 to mix the yellow and the white thereof with each other. The mixing ratio between the dried bean-curd refuse 2 and the egg 4 is set to 3:1 to 1:1.

After warm water 6 having a temperature of 50°C to 60°C is added to the uniform mixture 5 containing the egg 4 and the bean-curd refuse coagulating agent 3, the mixture thereof is stirred to prepare a uniform mixture 7 of the step (A). The mixing ratio between the warm water serving as the dispersion medium for the calcium hydroxide and the warm water 6 to be used for the uniform mixture 5 is set to 1/5 to 3/5 and preferably 2/5.

At the step (B), after fine konnyaku powder 9 is added to warm water 8, the mixture thereof is stirred to prepare konnyaku paste 10. The temperature of the warm water 8 is set to 50 to 65°C. The mixing amount of the warm water 8 is set to 25 to 35 times larger than that of the fine konnyaku powder 9.

The uniform mixture 7 prepared at the step (A) is supplied to the konnyaku paste 10 prepared at the step (B). The mixture thereof is stirred to prepare an all components-containing uniform mixture 11.

The mixing ratio between the fine konnyaku powder 9 and the dried bean-curd refuse 2 is set to the range of 1:5 to 1:1.

After the all components-containing uniform mixture 11 is filled into a die having a required configuration, the all components-containing uniform mixture 11 is heated for 1.5 hours to 2.5 hours to solidify it, with the die immersed in warm water having a temperature of 85 to 100°C.

After the all components-containing uniform mixture 11 solidifies, it is taken out of the die, and thereafter cut squarely or circularly according to the shape of the products.

After the cutting process finishes, primary cooling is performed by immersing the all components-containing uniform mixture 11 in cold water. Thereafter the all components-containing uniform mixture 11 is packed in vacuum.

The all components-containing uniform mixture 11 is heated to sterilize it at a temperature in the range of 80°C to the boiling temperature for 30 minutes to two hours.

After the all components-containing uniform mixture 11 is heated to sterilize it, secondary cooling is performed. That is, the all components-containing uniform mixture 11 is stored for about 24 hours in cold water having a temperature of not more than 10°C or in a refrigerator to cool it to the center thereof. That is, the all components-containing uniform mixture 11 is cooled until it is ready for freezing.

After the secondary cooling finishes, the all components-containing uniform mixture 11 is stored in a freezer.

It is possible to fill the all components-containing uniform mixture 11 in a pack, seal the pack, and heat the pack to solidify the all components-containing uniform mixture 11.

### EXAMPLES

Eight kilograms of dried bean-curd refuse powder was supplied to a container of a powder-kneading machine. After the dried bean-curd refuse powder was stirred for five minutes, a calcium hydroxide solution containing 20 liters of warm water having a temperature of 60°C and 200g of powder of calcium hydroxide dissolved in the warm water was supplied several times to the dried bean-curd refuse powder while it was being stirred. After whole the calcium hydroxide solution was supplied to the dried bean-curd refuse powder, the mixture thereof was stirred. The water mixed uniformly with the bean-curd refuse in the uniform mixture. In this manner, the "bean-curd refuse coagulating agent" was prepared.

A entire raw egg was supplied to the bean-curd refuse coagulating agent after confirming that the temperature of the bean-curd refuse coagulating agent was not more than 55°C.

The weight of the egg was 4kg. After mixing the yellow and the white of the egg with each other, the egg was supplied to the uniform mixture containing the bean-curd refuse. Thereafter the stirring of the mixture thereof continued.

After confirming that the egg was uniformly mixed with the bean-curd refuse coagulating agent, eight liters of warm water having a temperature of 55°C was supplied to the uniform mixture of the egg and the bean-curd refuse coagulating agent, while the uniform mixture was being stirred. The obtained uniform mixture was stored in a container.

Three kilograms of fine konnyaku powder was supplied to 80 liters of warm water having a temperature of 60°C. The mixture thereof was stirred. Thereby konnyaku paste was prepared.

While the konnyaku paste was being kneaded at a low speed, the uniform mixture of the egg and the bean-curd refuse coagulating agent stored in the container was supplied to the konnyaku paste quickly. Thereafter the mixture thereof was stirred at a high speed to prepare an all components-containing uniform mixture.

The all components-containing uniform mixture was filled into a die.

Thereafter the die was put into warm water having a temperature in the range of 85°C to the boiling temperature. The all components-containing uniform mixture was heated for two hours to solidify it.

Thereafter the all components-containing uniform mixture was cut. Then primary cooling was performed by immersing the all components-containing uniform mixture for one hour in cold water having a temperature of not more than 30°C. Thereafter the all components-containing uniform mixture was packed in vacuum. After the packed all components-containing uniform mixture was stored for one hour in environment having a temperature of 85°C, the all components-containing uniform mixture was heated to sterilize it.

After the all components-containing uniform mixture was heated to sterilize it, secondary cooling was performed by immersing the all components-containing uniform mixture in cold water having a temperature of not more than 10°C to cool it to the center thereof. Instead of immersing the all components-containing uniform mixture in the cold water, the all components-containing uniform mixture may be stored in a refrigerator for not less than about 24 hours to cool it to the center thereof. After the secondary cooling finished, the all components-containing uniform mixture was stored in a freezer.

The konnyaku food manufactured in the above-described steps and stored in the freezer was thawed to taste it. Since the egg permeated sufficiently into the bean-curd refuse, the taste of the konnyaku food of the present invention was quite different from that of the konnyaku food manufactured by the method disclosed in the patent document 1. That is, the konnyaku food of the present invention tasted mild. This is because the taste of bean-curd contained in the konnyaku food of the present invention is quite different from that of the bean-curd refuse of the konnyaku food manufactured by the method disclosed in the patent document 1. Because the bean-curd refuse was integral with the konnyaku, the konnyaku food did not taste dry but had a taste quite different from that of the conventional konnyaku food.

In the second embodiment, gelidium jelly was added to the bean-curd refuse coagulating agent as the viscous food. After the mixture thereof was kneaded, a required amount of each of salt, soy sauce, a chemical seasoning, and paste of fish was added to the uniform mixture of the gelidium jelly and the bean-curd refuse coagulating agent. The mixture of the above-described materials and the warm water was kneaded. As in the case of the first embodiment, the konnyaku paste was added to the uniform mixture. The operations performed in the subsequent steps were similar to those of the first embodiment. Thus description thereof is omitted herein.

Since the konnyaku food of the second embodiment was seasoned to have a Japanese-style taste. Therefore after the frozen konnyaku food is thawed, it is only heated. It is unnecessary to cook by adding seasonings thereto.

In the third embodiment, a fermented dairy product was added to the bean-curd refuse coagulating agent as the viscous food. After the mixture thereof was kneaded, a required amount of each of sugar and butter was added to the uniform mixture. Thereafter the mixture of the above-described materials and the warm water was kneaded. The konnyaku paste was added to the uniform mixture. The operations performed in the subsequent steps were similar to those of the first embodiment.

The konnyaku food of the third embodiment was formed as sweets.

## Claims

1. A method of manufacturing konnyaku food comprising the steps of:
adding an alkali solution to dried bean-curd refuse and kneading a mixture thereof to prepare a bean-curd refuse coagulating agent;
adding viscous food to said bean-curd refuse coagulating agent and kneading a mixture thereof to obtain a first uniform mixture;
adding warm water to said first uniform mixture to prepare a second uniform mixture;
adding konnyaku paste obtained by kneading a mixture of fine konnyaku powder and said warm water to said second uniform mixture and kneading a mixture thereof to prepare an all components-containing uniform mixture; and
heating said all components-containing uniform mixture to coagulate said all components-containing uniform mixture.

2. The method according to claim 1, wherein said alkali solution to be added to said dried bean-curd refuse includes a calcium hydroxide solution, a sodium carbonate solution, and ash of trees and plants that solidify said konnyaku paste sufficiently when said konnyaku paste is mixed with said alkali solution.

3. The method according to claim 1, wherein as said viscous food to be added to said bean-curd refuse coagulating agent, one or a plurality of the following foods is used:
animal foods including a hen's egg, fermented milk, animal joints, an outermost layer of the skin of fish, fish eggs, a jellyfish, shark fin, eel, dojo; and
vegetative foods including yams such as a Chinese yam, Icho-imo, and a cinnamon vine; a taro, an okura (gumbo), grated yam, water shield, arrowroot starch gruel, Welsh onion, glutinous rice, non-glutinous rice, fermented soybeans, seaweeds such as kombu (tangle), wakame, and the like; and gelidium jelly, an edible fungus of the family Strophariacede (Pholiota nameko).

4. The method according to claim 1, wherein calcium hydroxide is used as said alkali solution; and a hen's raw egg is used as said viscous food.

5. The method according to claim 1, comprising the steps of: heating said all components-containing uniform mixture after said all components-containing uniform mixture is filled into a die having a predetermined configuration; performing primary cooling after said all components-containing uniform mixture is integrally solidified by said heating; and packing said all components-containing uniform mixture; heating said all components-containing uniform mixture to sterilize said all components-containing uniform mixture; performing secondary cooling; and storing said all components-containing uniform mixture in a freezer as frozen food.

6. The method according to claim 1, comprising the steps of: heating said all components-containing uniform mixture after said all components-containing uniform mixture is filled in a closed bag; performing primary cooling after said all components-containing uniform mixture is integrally solidified by said heating; heating said all components-containing uniform mixture to sterilize said all components-containing uniform mixture; performing secondary cooling; and storing said all components-containing uniform mixture in a freezer as frozen food.

7. The method according to claim 4, wherein said calcium hydroxide solution to be added to said dried bean-curd refuse is prepared by using warm water having a temperature not less than the normal temperature as a dispersion medium therefor; and a mixing ratio between said dried bean-curd refuse and said calcium hydroxide is set to a range of 30:1 to 55:1.

8. The method according to claim 4, wherein an entire raw egg is added to a uniform mixture of said bean-curd refuse and said calcium hydroxide solution; and a mixing ratio between said dried bean-curd refuse and said raw egg is 3:1 to 1:1.

9. The method according to claim 4, wherein a mixing ratio between warm water to be added to said uniform mixture of said dried bean-curd refuse, said calcium hydroxide solution, and said raw egg and warm water to be added to said calcium hydroxide as a dispersion medium therefor is set to 1/5 to 3/5.

10. The method according to claim 1, wherein a mixing amount of water is set to 25 to 35 times larger than that of said fine konnyaku powder; and a mixing ratio between said fine konnyaku powder and said dried bean-curd refuse is set to a range of 1:5 to 1:1.

11. The method according to claim 5, wherein said all components-containing uniform mixture is heated by warm water having a temperature of 80 to 100°C; a temperature at which said all components-containing uniform mixture is heated to sterilize said all components-containing uniform mixture is set to a range of 80°C to the boiling temperature; in said secondary cooling, cold wind or cold water is used to cool said all components-containing uniform mixture to a temperature at which said all components-containing uniform mixture can be frozen; and said all components-containing uniform mixture is frozen in a freezer.

12. The method according to claim 6, wherein said all components-containing uniform mixture is heated by warm water having a temperature of 80 to 100°C; a temperature at which said all components-containing uniform mixture is heated to sterilize said all components-containing uniform mixture is set to a range of 80°C to the boiling temperature; in said secondary cooling, cold wind or cold water is used to cool said all components-containing uniform mixture to a temperature at which said all components-containing uniform mixture can be frozen; and said all components-containing uniform mixture is frozen in a freezer.

13. The method according to claim 1, wherein seasonings, vegetables, fruits, cereals, paste of fish or meat or fish or meat in a liquid state, a thickening stabilizer such as gums are added to said uniform mixture of said bean-curd refuse coagulating agent and said viscous food.

14. A konnyaku food manufactured by the manufacturing method according to claim 1.

15. A konnyaku food manufactured by the manufacturing method according to claim 4.

16. A frozen konnyaku food manufactured by the manufacturing method according to claim 5.

17. A frozen konnyaku food manufactured by the manufacturing method according to claim 6.
